# EUROPEAN PATENT APPLICATION

(11) **EP 4 425 449 A1**
(43) Date of publication of application: **04.09.2024**
(21) Application number: 23208537.3
(22) Date of filing: 08.11.2023
(51) Int. Cl.: G06V 20/59, B60W 40/08

(54) **SMART IN-CABIN MONITORING SYSTEM**

(30) Priority: 03.03.2023 KR 20230028327
(71) Applicant: Deltax Co., Ltd., Seoul 04522 (KR)
(72) Inventor: KIM, Suhun, 22368 Incheon (KR)
(74) Representative: Himmelsbach, Mathias

(57) **Abstract**

The present disclosure is a smart in-cabin monitoring system for monitoring a vehicle, comprising a camera module embedded in an overhead console of the vehicle, a memory connected to the camera module, and a processor connected to the camera module and the memory, wherein the camera module photographs a vehicle interior to generate a vehicle interior image, and the processor is configured to generate a vehicle interior information with the vehicle interior image, monitor the vehicle interior information, and control vehicle's interior devices or to transmit an alarm to a driver or a passenger, thereby enabling the processor to monitor an image photographed by the camera module and providing a convenience function to the driver and the passenger boarding a vehicle by controlling the vehicle's interior devices.

## Description

### FIELD OF THE INVENTION

The present disclosure is related to a smart in-cabin monitoring system, wherein a camera module embedded in an overhead console of a vehicle photographs an interior of the vehicle to generate an image, a processor generates monitoring information based on the image and analyzes the monitoring information using artificial intelligence, thereby transmitting an alarm to a driver or a passenger and providing a convenience function to a driver or a passenger by controlling vehicle's interior devices.

### BACKGROUND

Vehicles are typically equipped with a variety of devices for providing convenience of a driver and passengers. For example, in case that a driver and passengers are not fastening their seat belt while the vehicle is in operation, an audio device of the vehicle may output an alarm to remind them to fasten their seat belt. Furthermore, in case that a driver is seated in the seat, the driver may press a seat position button to move the seat to a preset seat position. Furthermore, to prevent drowsy driving of a user, various sensors may be equipped to determine whether the user is drowsy, and sounds, vibrations, and the like may be output to prevent drowsiness. However, such a device for convenience of a driver and passengers requires a number of sensors to operate the device, and a plurality of control modules for controlling such sensors must be equipped, and signal lines for connecting the sensors and the control modules must be equipped within the vehicle. As a result, a complex installation of numerous devices inside the vehicle can lead to difficulties in troubleshooting and maintenance when any one function malfunctions.

### PROBLEMS TO BE SOLVED

The present disclosure is to provide a smart in-cabin monitoring system comprising a camera module for photographing a vehicle interior, and a processor for generating monitoring information with the photographed image and analyzing the monitoring information using an artificial intelligence algorithm in order to provide various convenience functions to a driver and passengers, and to transmit notifying alarms.

Furthermore, the present disclosure is to provide a smart in-cabin monitoring system comprising a processor for setting a plurality of landmarks on a driver's face and monitoring movements of the landmarks to prevent drowsy driving or non-looking ahead of the driver.

Furthermore, the present disclosure is to provide a smart in-cabin monitoring system comprising a processor capable of generating appearance information such as a number of passengers, physique, and the like, and monitoring the appearance information to control a seat and a suspension of a vehicle in order to adjust a seat position of a passenger and control the suspension of the vehicle.

Furthermore, the present disclosure is to provide a smart in-cabin monitoring system comprising a processor capable of monitoring vehicle interior information before and after a passenger exits in order to prevent the passenger from missing belongings in the vehicle when exiting.

The purpose of the embodiments of the present disclosure is not limited to the above-mentioned purpose, and other purposes not mentioned above will be clearly understood by those skilled in the art to which the present disclosure pertains from the description below.

### SUMMARY OF THE INVENTION

According to one aspect of the present disclosure, a smart in-cabin monitoring system for monitoring a vehicle may be provided, which comprises a camera module embedded in an overhead console of the vehicle, a memory connected to the camera module, and a processor connected to the camera module and the memory, wherein the camera module photographs a vehicle interior to generate a vehicle interior image, and the processor is configured to generate vehicle interior information with the vehicle interior image, monitor the vehicle interior information, and control vehicle's interior devices or to transmit an alarm to a driver or a passenger.

According to an embodiment of the present disclosure, a smart in-cabin monitoring system may be provided, wherein the vehicle interior image includes a driver's motion image generated by the camera module by detecting a driver's motion inside the vehicle; a passenger image generated by the camera module by photographing the passenger inside the vehicle; and an interior condition image generated by the camera module by photographing a vehicle interior in which a driver or passenger has boarded and a vehicle interior in which a driver or passenger has disembarked.

Furthermore, according to an embodiment of the present disclosure, a smart in-cabin monitoring system may be provided, wherein the vehicle interior information includes driver's motion information generated from the driver's motion image, passenger information generated from the passenger image, and interior condition information generated from the interior condition image.

Furthermore, according to an embodiment of the present disclosure, a smart in-cabin monitoring system may be provided, wherein the driver's motion information includes steering wheel gripping information regarding a driver motion of gripping a steering wheel of the vehicle during operation, and driver's facial motion information for monitoring a driver's facial motion by setting a plurality of landmarks on the driver's face and recognizing movements of the landmarks.

Furthermore, according to an embodiment of the present disclosure, a smart in-cabin monitoring system may be provided, wherein the passenger information includes seat belt fastening information regarding whether a passenger boarding the vehicle is fastening a seat belt; passenger appearance information regarding the passenger's appearance; passenger motion information for monitoring a passenger's gesture by setting a plurality of landmarks on the passenger's body and recognizing movements of the landmarks; and passenger expression information for monitoring a passenger's facial expression by setting a plurality of other landmarks on passenger's face and recognizing position changes of the other landmarks.

Furthermore, according to an embodiment of the present disclosure, a smart in-cabin monitoring system may be provided, wherein the interior condition information includes missing belongings information for determining whether the belongings are missing by comparing images before and after a passenger exits, emergency situation information of the vehicle when an emergency situation occurs for the vehicle, and interior brightness information regarding brightness of light inside the vehicle.

Furthermore, according to an embodiment of the present disclosure, a smart in-cabin monitoring system may be provided, wherein the processor is configured to analyze the steering wheel gripping information and send a grip warning alarm to a driver in case that the driver is not gripping the steering wheel for a predetermined period of time.

Furthermore, according to an embodiment of the present disclosure, a smart in-cabin monitoring system may be provided, wherein the processor is configured to analyze the driver's facial motion information, determine whether the driver is looking ahead or is drowsy driving based on the movement of the plurality of landmarks, and transmit a warning alarm to the driver when it is recognized that the driver is not looking ahead or is drowsy driving.

Furthermore, according to an embodiment of the present disclosure, a smart in-cabin monitoring system may be provided, wherein the processor is configured to analyze the passenger appearance information and control a plurality of suspensions equipped in the vehicle.

Furthermore, according to an embodiment of the present disclosure, a smart in-cabin monitoring system may be provided, wherein the processor is configured to analyze the passenger appearance information and adjust a position of a seat of the vehicle based on a passenger.

Furthermore, according to an embodiment of the present disclosure, a smart in-cabin monitoring system may be provided, wherein the processor analyzes the passenger motion information and controls the vehicle's interior devices based on a passenger's gesture.

Furthermore, according to an embodiment of the present disclosure, a smart in-cabin monitoring system may be provided, wherein the processor is configured to analyze the passenger expression information and control the vehicle's interior devices.

Furthermore, according to an embodiment of the present disclosure, a smart in-cabin monitoring system may be provided, wherein the processor is configured to analyze the missing belongings information and transmit a notifying alarm to a passenger regarding the missing belongings.

Furthermore, according to an embodiment of the present disclosure, a smart in-cabin monitoring system may be provided, wherein the processor is configured to analyze the emergency situation information and transmit an emergency situation alarm to a hospital adjacent to the vehicle informing an interior image and the emergency situation of the vehicle.

Furthermore, according to an embodiment of the present disclosure, a smart in-cabin monitoring system may be provided, wherein the processor is configured to analyze the interior brightness information and adjust a height of a window of the vehicle based on a preset interior brightness of the vehicle or a location of the vehicle.

Furthermore, according to an embodiment of the present disclosure, a smart in-cabin monitoring system may be provided, wherein the memory is configured to store the vehicle interior image generated by the camera module and store the vehicle interior information generated by the processor.

Furthermore, according to an embodiment of the present disclosure, a smart in-cabin monitoring system may be provided, wherein the vehicle's interior devices include an audio system of the vehicle, a suspension of wheels of the vehicle, a seat of the vehicle, at least one or more window of the vehicle, or a communication device of the vehicle.

The present disclosure may provide various convenience functions to a passenger and transmit a notifying alarm by equipping a vehicle with a camera module embedded in an overhead console, generating vehicle interior information with an image generated by the camera module, and monitoring the vehicle interior information using an artificial intelligence algorithm.

Furthermore, the present disclosure comprises a processor for setting a plurality of landmarks on a driver's face and monitoring movements of the landmarks to prevent drowsy driving or the driver from not looking ahead.

Furthermore, the present disclosure comprises a processor capable of generating appearance information such as a number of passengers, physique, and the like, and monitoring the appearance information to control a seat and a suspension of a vehicle, thereby adjusting a seat position of a passenger and controlling the suspension of the vehicle.

Furthermore, the present disclosure comprises a processor capable of monitoring vehicle interior information before and after a passenger exits, thereby preventing the passenger from missing belongings in the vehicle when exiting.

### BRIEF DESCRIPTION OF THE DRAWINGS

FIG. 1 is a drawing illustrating a smart in-cabin monitoring system according to an embodiment of the present disclosure.
FIG. 2A is a drawing explaining a camera module of a smart in-cabin monitoring system according to an embodiment of the present disclosure.
FIG. 2B is a drawing explaining a processor of a smart in-cabin monitoring system according to an embodiment of the present disclosure.
FIG. 3 is a drawing explaining monitoring of steering wheel gripping information by a processor of a smart in-cabin monitoring system according to an embodiment of the present disclosure.
FIG. 4A is a drawing explaining monitoring of facial motion information by a processor of a smart in-cabin monitoring system according to an embodiment of the present disclosure.
FIG. 4B is a drawing illustrating setting of landmarks by a processor of a smart in-cabin monitoring system according to an embodiment of the present disclosure.
FIG. 4C is a drawing illustrating landmark movements for monitoring drowsy driving by a processor of a smart in-cabin monitoring system, according to an embodiment of the present disclosure.
FIG. 5 is a drawing explaining monitoring of seat belt fastening information by a processor of a smart in-cabin monitoring system according to an embodiment of the present disclosure.
FIG. 6 is a drawing explaining monitoring of passenger appearance information by a processor of a smart in-cabin monitoring system according to an embodiment of the present disclosure.
FIG. 7 is a drawing explaining monitoring of passenger motion information by a processor of a smart in-cabin monitoring system according to an embodiment of the present disclosure.
FIG. 8 is a drawing explaining monitoring of passenger expression information by a processor of a smart in-cabin monitoring system according to an embodiment of the present disclosure.
FIG. 9 is a drawing explaining monitoring of missing belongings information by a processor of a smart in-cabin monitoring system according to an embodiment of the present disclosure.
FIG. 10 is a drawing explaining monitoring of emergency situation information by a processor of a smart in-cabin monitoring system according to an embodiment of the present disclosure.
FIG. 11 is a drawing explaining monitoring of vehicle interior brightness information by a processor of a smart in-cabin monitoring system according to an embodiment of the present disclosure.

### DESCRIPTION OF THE INVENTION

Advantages and characteristics of the embodiments of the present disclosure, and methods of achieving the same, will become clear with reference to the embodiments described below in detail along with the accompanying drawings. However, the present disclosure is not limited to the embodiments disclosed below and may be implemented in a variety of different forms. These embodiments are provided to make the disclosure of the present disclosure complete, and to fully inform those skilled in the art to which the present disclosure pertains of the scope of the disclosure, and the present disclosure will be defined only by the scope of the claims. The same reference signs designate the same components throughout the specification.

In describing the embodiments of the present disclosure, if it is determined that a detailed description of a known function or configuration may unnecessarily obscure the subject matter of the present disclosure, such detailed description will be omitted. Furthermore, terms to be described below are terms defined in consideration of functions in the embodiments of the present disclosure, which may vary according to the intention or custom of a user or operator. Therefore, the definition thereof should be made based on the contents throughout this specification.

Hereinafter, embodiments of the present disclosure will be described in detail with reference to the accompanying drawings.

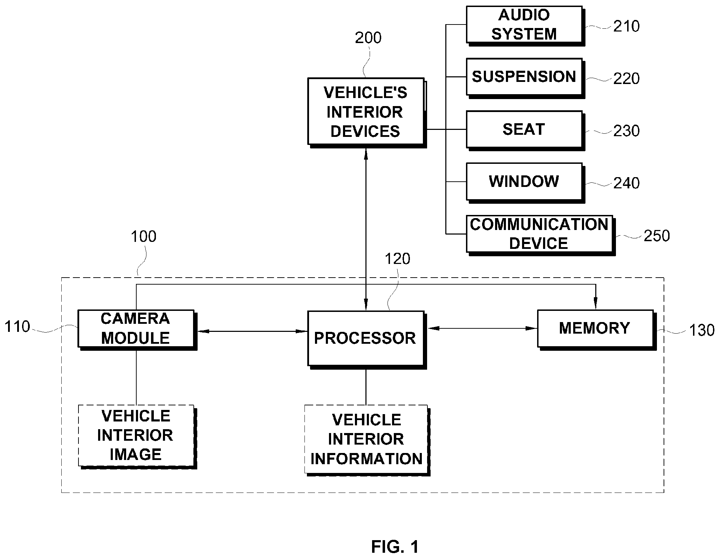

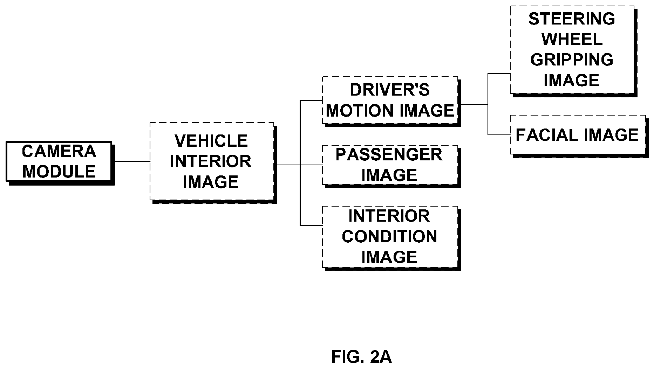

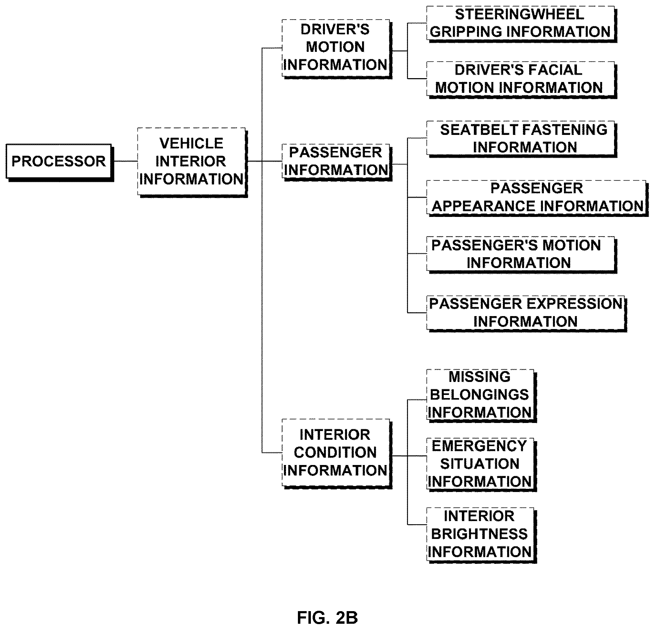

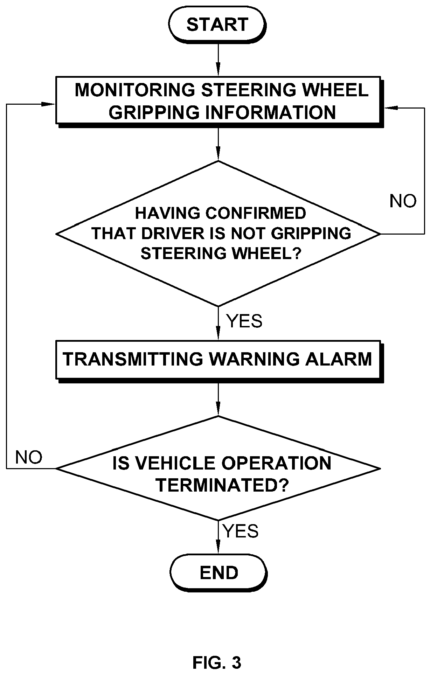

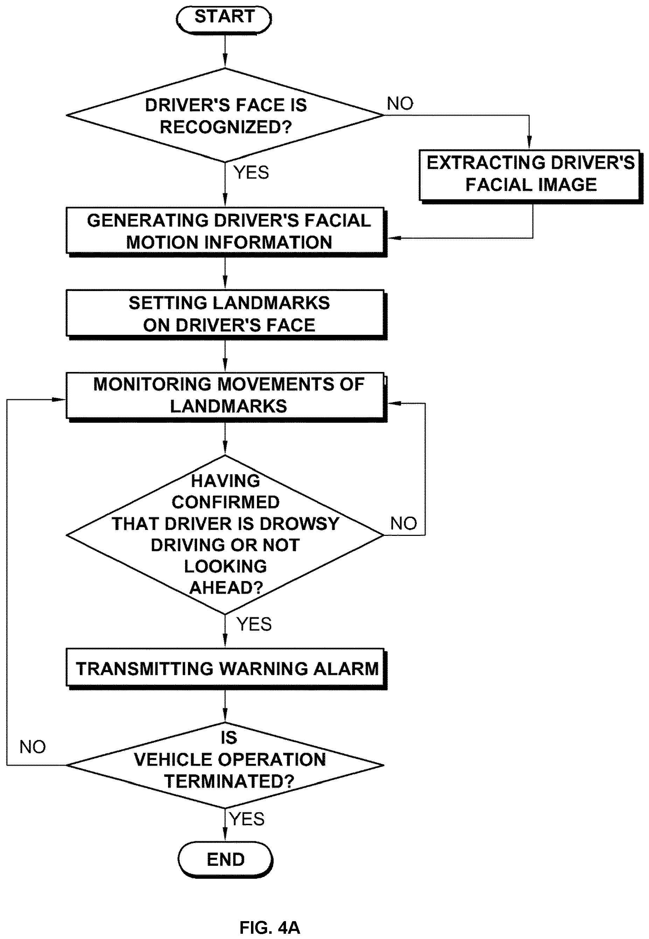

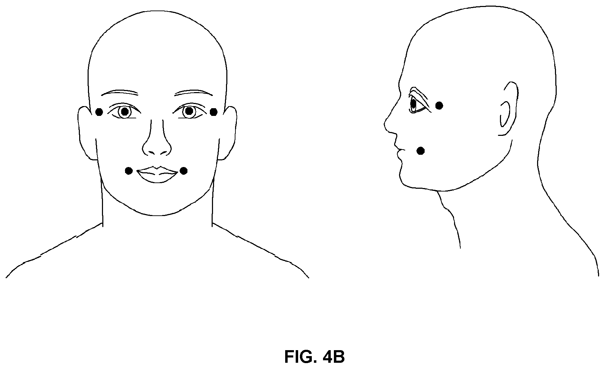

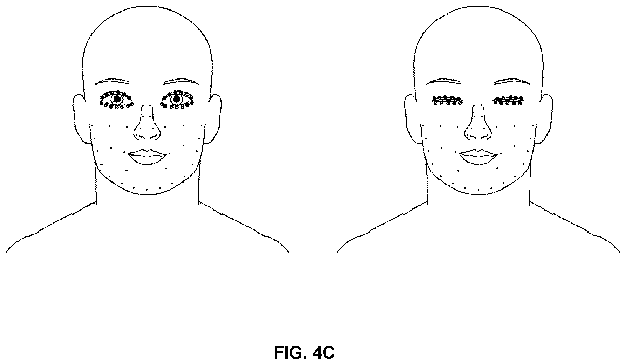

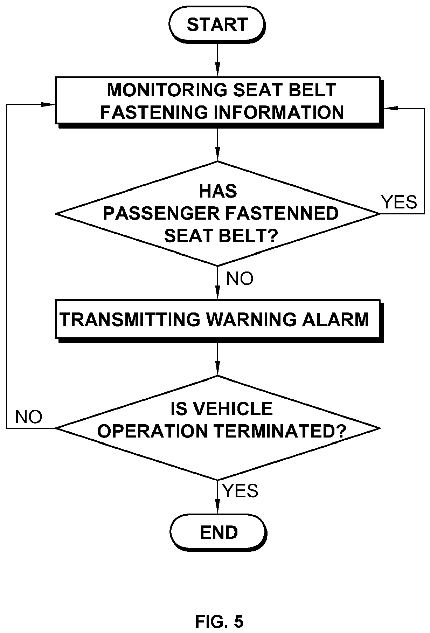

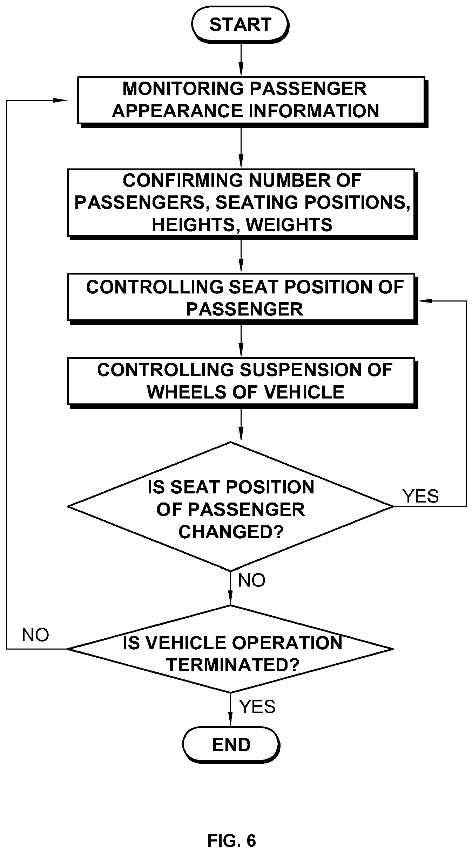

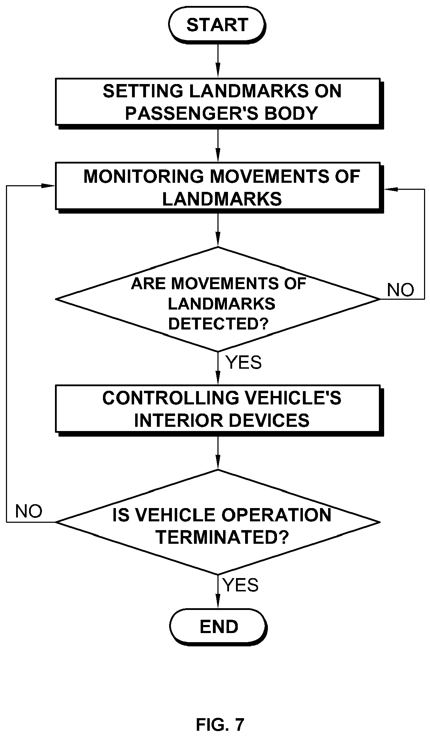

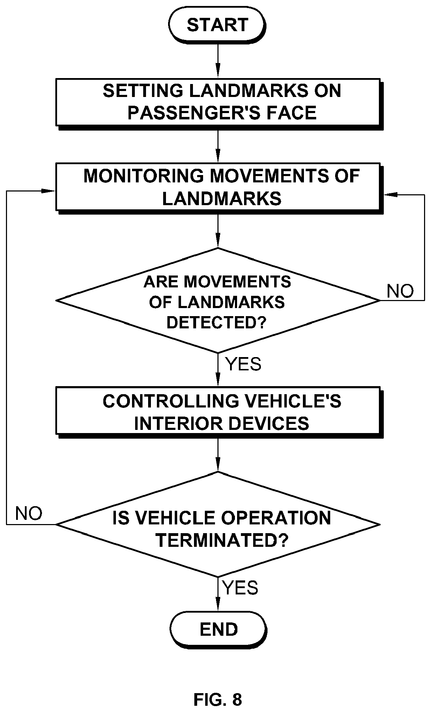

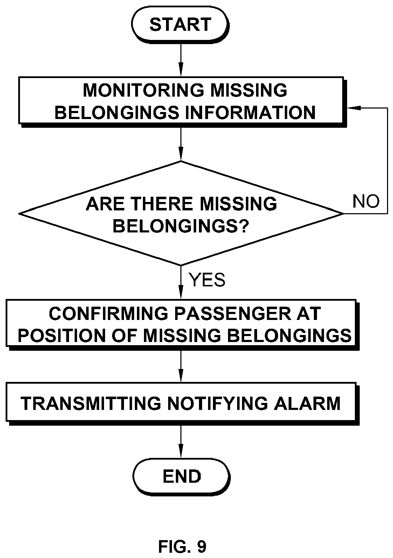

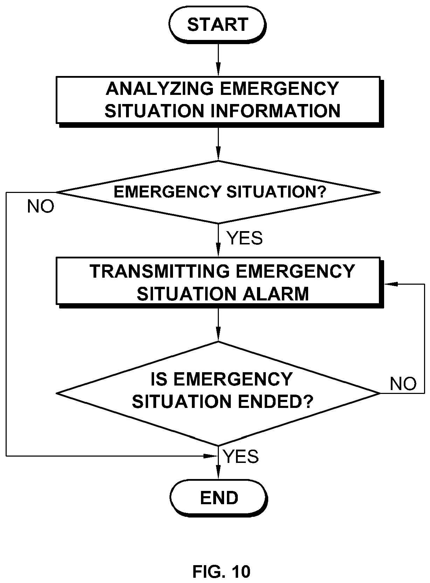

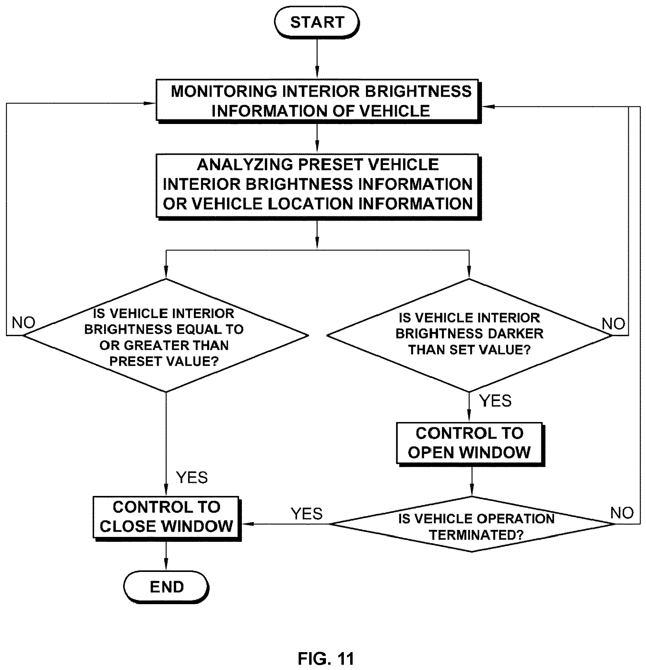

FIG. 1 is a drawing illustrating a smart in-cabin monitoring system according to an embodiment of the present disclosure; FIG. 2A is a drawing explaining a camera module of a smart in-cabin monitoring system according to an embodiment of the present disclosure; FIG. 2B is a drawing explaining a processor of a smart in-cabin monitoring system according to an embodiment of the present disclosure; FIG. 3 is a drawing explaining monitoring of steering wheel gripping information by a processor of a smart in-cabin monitoring system according to an embodiment of the present disclosure; FIG. 4A is a drawing explaining monitoring of facial motion information by a processor of a smart in-cabin monitoring system according to an embodiment of the present disclosure; FIG. 4B is a drawing illustrating setting of landmarks by a processor of a smart in-cabin monitoring system according to an embodiment of the present disclosure; FIG. 4C is a drawing illustrating landmark movements for monitoring drowsy driving by a processor of a smart in-cabin monitoring system, according to an embodiment of the present disclosure; FIG. 5 is a drawing explaining monitoring of seat belt fastening information by a processor of a smart in-cabin monitoring system according to an embodiment of the present disclosure; FIG. 6 is a drawing explaining monitoring of passenger appearance information by a processor of a smart in-cabin monitoring system according to an embodiment of the present disclosure; FIG. 7 is a drawing explaining monitoring of passenger motion information by a processor of a smart in-cabin monitoring system according to an embodiment of the present disclosure; FIG. 8 is a drawing explaining monitoring of passenger expression information by a processor of a smart in-cabin monitoring system according to an embodiment of the present disclosure; FIG. 9 is a drawing explaining monitoring of missing belongings information by a processor of a smart in-cabin monitoring system according to an embodiment of the present disclosure; FIG. 10 is a drawing explaining monitoring of emergency situation information by a processor of a smart in-cabin monitoring system according to an embodiment of the present disclosure; and FIG. 11 is a drawing explaining monitoring of vehicle interior brightness information by a processor of a smart in-cabin monitoring system according to an embodiment of the present disclosure.

Referring to FIG. 1 to FIG. 11, according to an embodiment of the present disclosure, a smart in-cabin monitoring system 100 may comprise a camera module 110, a processor 120, a memory 130 and the like.

The camera module 110 may be embedded in an overhead console of the vehicle and may photograph a driver, passengers, an interior of the vehicle, and the like. The camera module 110 may photograph a driver of the vehicle and detect the driver's motion to generate a driver's motion image. Furthermore, the camera module 110 may photograph a passenger of the vehicle to generate a passenger image (wherein the passenger image may include an image of the driver). Furthermore, the camera module 110 may photograph an interior of the vehicle in which a driver or passenger has boarded and an interior of the vehicle in which a driver or passenger has disembarked to generate an interior condition image.

Referring to FIG. 1 and FIG. 2A, according to an embodiment of the present disclosure, the driver's motion image, the passenger image, and the interior condition image generated by the camera module 110 may be transmitted to the processor 120 to be monitored by the processor 120. Furthermore, the driver's motion image, the passenger image, and the interior condition image generated by the camera module 110 may be transmitted to the memory 130 to be stored in the memory 130.

According to an embodiment of the present disclosure, the driver's motion image may include such as a steering wheel gripping image in which a driver's motion of gripping a steering wheel is photographed, and a facial image in which a driver's face and the driver's facial movements are photographed.

Referring to FIG. 1 and FIG. 2B, the processor 120 may be connected to the camera module 110 and the memory 130, and generate vehicle interior information from images generated by the camera module 110 or vehicle interior images stored in the memory 130. Furthermore, the processor 120 may monitor vehicle interior information to control vehicle's interior device 200, and transmit notifying or warning alarms and the like to the driver or passengers.

According to an embodiment of the present disclosure, the processor 120 may generate vehicle interior information from vehicle interior images. The vehicle interior information may include such as driver's motion information generated from the driver's motion image, passenger information generated from the passenger image, and interior condition information generated from the interior condition image.

According to an embodiment of the present disclosure, the driver's motion information may include steering wheel gripping information regarding a gripping motion of a driver while operating a vehicle, and driver's facial motion information setting a plurality of landmarks on the driver's face and detecting movements of the landmarks and the like.

According to an embodiment of the present disclosure, the processor 120 may monitor and analyze driver's motion information, passenger information, and interior condition information using various artificial intelligence algorithms.

Referring to FIG. 3, the processor 120 may analyze the steering wheel gripping information and transmit a grip warning alarm to a driver in case that the driver is not gripping the steering wheel for a predetermined period of time.

According to an embodiment of the present disclosure, the driver's motion image generated by the camera module 110 includes such as images of the driver operating a vehicle while gripping the steering wheel with both hands or one hand.

According to an embodiment of the present disclosure, the processor 120 may generate steering wheel gripping information from a steering wheel gripping image of a driver. The steering wheel gripping information may include information such as whether the driver is gripping the steering wheel with one or both hands, and a duration of the grip and the like. The processor 120 may analyze the steering wheel gripping information to monitor whether the driver is consistently gripping the steering wheel while driving. In particular, the processor 120 may set a predetermined duration during which the driver does not grip the steering wheel. That is, a driver may temporarily release his/her grip on the steering wheel while driving. If the processor 120 detects such a situation and then immediately transmits a warning alarm to the driver, it could potentially interfere with the driver's driving (e.g., in case that the driver temporarily releases the steering wheel while waiting at a signal). Accordingly, the processor 120 may set a predetermined duration, such that as long as the driver grips the steering wheel for more than the predetermined duration, the processor 120 may recognize that the driver is still gripping the steering wheel.

According to an embodiment of the present disclosure, the processor 120 may transmit a warning alarm to remind the driver to grip the steering wheel if the driver has not been gripping the steering wheel for a predetermined duration (or, if no predetermined duration is set, the processor 120 may transmit a warning alarm to the driver immediately if the driver is not gripping the steering wheel). That is, in case of transmitting a warning alarm to the driver, the processor 120 may control the audio system 210 of the vehicle, thereby transmitting a warning alarm to the driver by voice through the audio system 210.

When the vehicle operation ends, the processor 120 may terminate monitoring of the steering wheel gripping information.

According to an embodiment of the present disclosure, the processor 120 may utilize EcaResnet 50 algorithm, among various artificial intelligence algorithms, to monitor steering wheel gripping information. The EcaResnet 50 is a deep neural network (DNN) that is often used for image classification and object recognition.

Referring to FIG. 4A and FIG. 4B, the processor 120 may analyze driver's facial motion information to detect movements of landmarks by setting a plurality of landmarks on the driver's face.

According to an embodiment of the present disclosure, the processor 120 may determine whether the driver is looking ahead or drowsy driving based on the movements of the plurality of landmarks. Furthermore, the processor 120 may transmit a warning alarm to the driver when it is recognized that the driver is not looking ahead or is drowsy driving.

Referring to FIG. 4A, according to an embodiment of the present disclosure, the processor 120 may extract a driver's facial image by recognizing the driver's face from the driver's motion image. Furthermore, if it is difficult to directly recognize the driver's face from the driver's motion image, the processor 120 may extract the driver's facial image from the driver's motion image and recognize the driver's facial skeleton to recognize the driver's face.

According to an embodiment of the present disclosure, the processor 120 may generate driver's facial motion information from the extracted driver's facial image. Driver's facial motion information may include information about movements of the driver's eyes, nose, mouth and the like.

Referring to FIG. 4B and FIG. 4C, the processor 120 may set a plurality of landmarks on the driver's face, particularly the driver's eyes, outer corners of both eyes of the driver, and corners of the driver's mouth in order to monitor whether the driver is looking ahead (Black dots in the drawings: six exemplarily shown on a front face on a left side of the drawing, and three exemplarily shown on a side face on a right side of the drawing). Here, the term 'landmark' refers to an imaginary point that the processor 120 sets at a specific position on the driver or passenger (e.g., on a face, joints of arms, both hands, and the like). The processor 120 may detect movements of the landmarks themselves, and generate an imaginary straight line from the landmarks (e.g., a straight line generated from the landmarks towards a front of the driver, a straight line generated from the landmarks towards one side of the driver, and the like) to detect movements along which the imaginary straight line moves. For example, if the driver turns his/her face or moves his/her mouth, the landmarks (i.e., point-shaped landmarks or imaginary lines generated from the landmarks) may also move along with movement of the face or mouth. According to an embodiment of the present disclosure, the processor 120 may set a plurality of landmarks on the driver's facial image to generate driver's facial motion information regarding movement information of the landmarks (e.g., movement information of the landmarks forward, backward, upward, downward, left, right, and the like). For example, in case that the driver turns his/her face to the left, the processor 120 may generate facial motion information indicating that landmarks set on the outer corners of both eyes of the driver and a plurality of landmarks located on both corners of the mouth move to the driver's left. The facial motion information may include a direction in which the landmarks are moving, a time it takes for the landmarks to move and return to their home position, and the like. The processor 120 may analyze this facial motion information to determine that the driver is not looking ahead while driving if the driver is turning his/her face to the left and if the plurality of landmarks do not return to their original positions.

Furthermore, if the landmarks set on both of the driver's eyes are continuously not located along the direction of vehicle travel, the processor 120 may determine that the driver's attention is dispersed, such as when the driver is using a mobile phone while driving. Accordingly, the processor 120 may control an audio system 210 to transmit a warning alarm to the driver to enable the driver to focus on driving.

Furthermore, the processor 120 may set a plurality of landmarks on the driver's face to monitor whether the driver is drowsy driving. The processor 120 may determine whether the driver is drowsy through movements of landmarks set on the driver's face. That is, if the landmarks set on the driver's face are repeatedly moving in a downwardly inclined movement along an arc trajectory with respect to the front and then returning, the processor 120 may use this pattern to determine whether the driver is drowsy driving. The processor 120 may measure the number of times movement of the plurality of landmarks (i.e., a downwardly inclined movement along the arc trajectory with respective to the front and then returning) is repeated, and an interval time between a forwardly inclined movement of the landmarks and their return, and the like. The processor 120 may determine whether the driver temporarily tilts his/her head downward or is drowsy driving through the measured number of times, the interval time, and the like.

Furthermore, the processor 120 may set a plurality of landmarks on both eyes of the driver. The processor 120 may determine whether the driver is drowsy through movements of the landmarks set on both eyes of the driver. That is, when the processor 120 confirms the movement of the landmark where both eyes of the driver are closed, it may measure a number of times both eyes are closed, a duration for which both eyes are closed, and the like. The processor 120 may determine whether the driver temporarily closed his/her eyes or is drowsy driving through the measured number of times, duration, and the like.

According to an embodiment of the present disclosure, the processor 120 may determine whether the driver is drowsy driving by monitoring a movement of at least one of movement of landmarks set on the driver's face and movement of the landmarks set on both eyes of the driver. If the processor 120 confirms the drowsy driving of the driver, the processor 120 may transmit an alarm to alert the driver. Furthermore, the processor 120 may play loud music through the audio system 210 to wake up the driver from drowsiness and control the vehicle's interior devices 200 to open the windows 240 of the vehicle to allow outside air to enter.

When the vehicle operation ends, the processor 120 may terminate monitoring of the driver's facial motion information.

According to an embodiment of the present disclosure, the processor 120 may utilize the Facelnsight (SFD) (Single Shot Scale-Invariant Face Detector) algorithm to monitor driver's facial motion information. The Facelnsight (SFD) algorithm is based on a Convolutional Neural Network (CNN), which is primarily an algorithm for detecting faces. The processor 120 may recognize the driver's face with the Facelnsight (SFD) algorithm and set landmarks on the driver's face. Furthermore, the processor 120 may monitor the movement of the preset landmarks using a custom CNN algorithm. The custom CNN algorithm is an algorithm designed for a specific task or problem instead of using an existing CNN algorithm such as ResNet.

Referring to FIG. 5, the processor 120 may generate passenger information from the passenger image. The passenger information may include information about the passenger's seat belt fastening information, information about the passenger's appearance, and the like (here, the passenger may include the driver).

According to an embodiment of the present disclosure, the processor 120 may generate seat belt fastening information from the passenger image to determine whether the passenger boarding the vehicle is fastening a seat belt (not shown).

The processor 120 may monitor seat belt fastening information and, if any of the passengers boarding the vehicle is not fastening a seat belt after the vehicle is started, may transmit an attention alarm to remind the passengers to fasten the seat belt. Furthermore, the processor 120 may continuously monitor seat belt fastening information so that if a passenger unbuckles the seat belt while the vehicle is moving, the processor 120 may recognize this and transmit an attention alarm to remind the passengers to fasten the seat belt.

When the vehicle operation ends, the processor 120 may terminate monitoring of the seat belt fastening information.

According to an embodiment of the present disclosure, the processor 120 may utilize EcaResnet 50 algorithm, among various artificial intelligence algorithms, to monitor seat belt fastening information. The EcaResnet 50 is a DNN that is often used for image classification and object recognition.

Referring to FIG. 6, the processor 120 may generate passenger appearance information boarding the vehicle from the passenger image. The passenger appearance information may include information such as a number of passengers in the vehicle, physique information of the passengers (e.g., height, weight), the passengers' age, gender, and the like.

According to an embodiment of the present disclosure, the processor 120 may monitor the passenger appearance information to confirm a number of passengers, seating positions of the passengers, the passenger's height, the passenger's weight, and the like.

Furthermore, the processor 120 may analyze the passenger appearance information to control a position of a seat 230 of the vehicle and a suspension 220 of the vehicle's wheels, and the like. For example, if three passengers (e.g., one middle-aged man, one middle-aged woman, and one female child) are seated in a passenger seat and rear seats of a vehicle, the camera module 110 may photograph appearances of the passengers. The processor 120 may generate appearance information of the passengers from the appearance image of the passengers, and the appearance information of the passengers may include detailed external information such as three passengers boarding the vehicle, one middle-aged male being in the passenger seat, one middle-aged female being in a rear seat of the driver's seat, one female child being in a rear seat of the passenger seat, weights of the passengers estimated by analyzing the heights, physiques, genders, and the like of the passengers. Furthermore, the processor 120 may analyze the appearance information of the middle-aged man and control the passenger seat 230 such that the seat 230 occupied by the middle-aged man is moved to the rear and a backrest of the seat 230 is reclined to a rear (the processor 120 may similarly control the seat occupied by the middle-aged woman and the seat occupied by the female child).

Furthermore, the processor 120 may analyze the passenger appearance information to control the suspension 220 of the vehicle to provide a comfortable ride for the passenger.

For example, if three passengers (one middle-aged man, one middle-aged woman, and one female child) are seated in a passenger seat and rear seats of a vehicle, the camera module 110 may photograph appearances of the passengers. The processor 120 may generate appearance information of the passengers from the appearance image of the passengers, and the appearance information of the passengers may include detailed external information such as three passengers boarding the vehicle, one middle-aged male being in the passenger seat, one middle-aged female being in a rear seat of the driver's seat, one female child being in a rear seat of the passenger seat, weights of the passengers estimated by analyzing the heights, physiques, genders, and the like of the passengers. Furthermore, the processor 120 may control the suspension 220 of the vehicle by analyzing appearance information such as positions of passengers seated within the vehicle, genders, and weights of the passengers, and the like. That is, by adjusting the suspension 220 of the wheels of the vehicle that carry relatively more weight, the passengers inside vehicle may experience a more stable ride even when the vehicle travels over obstacles such as road bumps.

When the vehicle operation ends, the processor 120 may terminate monitoring of the passenger appearance information.

According to an embodiment of the present disclosure, the processor 120 may utilize EcaResnet 50 algorithm, among various artificial intelligence algorithms, to monitor passenger appearance information. The EcaResnet 50 is a DNN that is often used for image classification and object recognition.

Referring to FIG. 7, the processor 120 may generate passenger motion information of passengers boarding the vehicle from the passenger image. The passenger motion information may include gesture detecting of the passengers. The gesture detecting refers to recognizing the motion information of a plurality of landmarks set on a passenger's body (in particular, hands). That is, the processor 120 may set a plurality of landmarks on the passenger's body (in particular, hands), and as the passenger's body (in particular, hands) moves, the landmarks may also move. When a passenger performs an action with a specific (or preset) motion, the landmarks will also display a specific direction, shape, and the like, such that the processor 120 may recognize the motion information of these landmarks and perform a control implied by the motion information of the landmarks. For example, if the passenger performs a motion extending a thumb and a little finger and putting them to ears, the processor 120 may recognize motion information of a plurality of landmarks set on the passenger's fingers, and the processor 120 may recognize that such motion information of these landmarks represents a dialing command, and perform a dialing control via the communication device 250 of the vehicle connected to the passenger's mobile phone. Furthermore, for example, if the passenger shakes his/her hand from side to side with an open palm, and then moves the hand up or down, the processor 120 may monitor this motion information to perform controls to increase or decrease a volume of the audio system 210 (of course, motion information such as dialing, adjusting volume, and the like may be preset by the passenger, and setting, changing, or canceling the motion information may also be performed by the passenger's motion).

When the vehicle operation ends, the processor 120 may terminate monitoring of the passenger motion information.

According to an embodiment of the present disclosure, the processor 120 may utilize EcaResnet 50 algorithm, among various artificial intelligence algorithms, to monitor passenger motion information. The EcaResnet 50 is a DNN that is often used for image classification and object recognition.

Referring to FIG. 8, the processor 120 may generate passenger expression information of passengers boarding the vehicle from the passenger image. The passenger expression information may include facial expression information about emotions such as happiness, sadness, anger, surprise, fear, and the like, exposed on the passenger's face. According to an embodiment of the present disclosure, the processor 120 may set a plurality of landmarks on the passenger's face, monitor changes in the position of the landmarks, and analyze the passenger's facial expression, thereby recognizing a current emotion of the passenger. The processor 120 may monitor the passenger expression information and control interior devices such as the audio system 210, windows 240, and the like in the vehicle, such that an interior condition of the vehicle may be adjusted to match the current emotional condition of the passenger. For example, the processor 120 may recognize that the passenger's current emotion is sad or depressed through monitoring for position changes of the landmarks. In such cases, the processor 120 may control the audio system 210 to play upbeat music to cheer up the passenger, transmit an alarm to prevent aggressive driving, or provide lighthearted banter with the passenger. Furthermore, the processor 120 may perform controls to open the window 240 to allow outside air to enter.

When the vehicle operation ends, the processor 120 may terminate monitoring of the passenger expression information.

According to an embodiment of the present disclosure, the processor 120 may utilize AffectNet-Emotion data to monitor passenger expression information. AffectNet is a large dataset of facial expressions that includes an emotion label for each image, and AffectNet-Emotion is a subset of the AffectNet dataset that focuses on recognizing six basic emotions: anger, disgust, fear, happiness, sadness, and surprise.

According to an embodiment of the present disclosure, the interior condition information may include such as missing belongings information to determine whether belongings are missing by comparing images before and after a passenger exits, emergency situation information of the vehicle when an emergency situation occurs for the vehicle, and interior brightness information regarding brightness of light inside the vehicle.

Referring to FIG. 9, the processor 120 may analyze the missing belongings information and transmit a notifying alarm to the passenger regarding missing belongings.

According to an embodiment of the present disclosure, the interior condition image generated by the camera module 110 may include an image captured before a passenger boards the vehicle, an image captured before a passenger exits the vehicle, and an image captured after a passenger exits the vehicle, and the like.

According to an embodiment of the present disclosure, the processor 120 may generate missing belongings information from the interior condition image. The processor 120 may monitor an image captured before the passenger boards the vehicle, an image captured before the passenger exits the vehicle, and an image captured after the passenger exits the vehicle, and the like to confirm the belongings left behind in the vehicle after the passenger exits the vehicle. That is, the processor 120 may compare the image captured before the passenger boards the vehicle with the image captured after the passenger exits, and if belongings that were not present before the passenger boards the vehicle are left behind after the passenger exits, the processor 120 may recognize these belongings as missing belongings when the passenger exits the vehicle. If the processor 120 recognizes the belongings missed by the passenger, the processor 120 may transmit a notifying alarm for belongings to the passenger who has disembarked. That is, the processor 120 may control the vehicle's communication device 250, thereby transmitting a notifying alarm to a passenger's mobile phone or the like.

When the vehicle operation ends, the processor 120 may terminate monitoring of the missing belongings information.

According to an embodiment of the present disclosure, the processor 120 may utilize ResNet34 algorithm to monitor the missing belongings information. The ResNet 34 is a variant of Residual Network (ResNet), a widely used CNN used for image classification, object detection, and other computer vision tasks.

Referring to FIG. 10, in case of an emergency situation involving the vehicle, a driver, or passenger, the processor 120 may analyze the emergency situation information and transmit the vehicle interior images and videos to a hospital located adjacent to the vehicle as an emergency situation alarm.

According to an embodiment of the present disclosure, the camera module 110 may generate an interior condition image of the vehicle, which may include an image of an emergency situation, such as a vehicle accident or a sudden collapse of the driver or passenger.

According to an embodiment of the present disclosure, the processor 120 may generate emergency situation information from the emergency situation image. The emergency situation information may include photos of the vehicle interior at a time of the emergency situation, photos of the driver or passenger, a location and time of the emergency, and the like. The processor 120 may analyze the emergency situation information and, if determined to be an emergency, transmit an emergency situation alarm. For example, if a vehicle is involved in an accident and there is a possibility that the driver or passengers may be injured, the processor 120 may control the communication device 250 of the vehicle to transmit an emergency situation alarm. That is, the processor 120 may transmit emergency situation information (e.g., a photo of the vehicle interior, a photo of the driver or passengers, and the like) to a plurality of hospitals, fire stations, police stations, and the like adjacent to the location of the vehicle. Furthermore, if a situation arises where a driver or passenger inside a vehicle suddenly collapses, the processor 120 may analyze such a situation and determine that it is an emergency situation. In such cases, the processor 120 may control the communication device 250 of the vehicle to transmit an emergency situation alarm. That is, the processor 120 may transmit emergency situation information (e.g., a photo of the driver or passengers, and the like) to a plurality of hospitals, fire stations, police stations, and the like adjacent to the location of the vehicle.

Furthermore, if the emergency situation has not ended even after transmitting the emergency situation alarm, the processor 120 may continue to transmit an emergency situation alarm to nearby hospitals, fire stations, police stations, and the like. Furthermore, the processor 120 may determine that the emergency situation has ended, such as when a driver or passenger in an accident is transported to a hospital, and may terminate monitoring of the emergency situation information.

Referring to FIG. 11, the processor 120 may open or close the windows 240 to adjust a height of the at least one or more windows 240 of the vehicle by analyzing interior brightness information regarding brightness of light inside the vehicle.

The vehicle interior image may include an image of brightness of light detected inside the vehicle. According to an embodiment of the present disclosure, the processor 120 may generate interior brightness information by analyzing an image regarding brightness of light inside the vehicle or a location of the vehicle. The interior brightness information may include information about preset interior brightness of the vehicle and brightness of light inside the vehicle based on the location of the vehicle. The processor 120 may monitor the current vehicle interior brightness information based on a preset value of a preset vehicle interior brightness. Here, the preset interior brightness may be set differently depending on a time of day, and the like. The processor 120 may control opening the window 240 of the vehicle if a current vehicle interior brightness is equal to or greater than a preset value of a preset vehicle interior brightness. Furthermore, the processor 120 may close the window 240 of the vehicle (or, if the window 240 of the vehicle is already closed, may keep it closed) if a current interior brightness of the vehicle is darker than a preset value of a preset interior brightness of the vehicle.

Furthermore, the processor 120 may set a predetermined amount of brightness inside the vehicle based on a location of the vehicle. The processor 120 may monitor the interior brightness information to adjust a height of the at least one window of the vehicle if the vehicle interior is equal to or greater than a preset value or darker than a preset value. For example, if the location of the vehicle is close to a tunnel and brightness of light inside the vehicle is equal to or greater than a predetermined level, the processor 120 may determine that the window 240 of the vehicle is open. Accordingly, the processor 120 may raise a height of the at least one window 240 of the vehicle to a maximum to close the window 240 to prevent entry of tunnel air into the vehicle. Similarly, if the location of the vehicle is outside of the tunnel and brightness of light inside the vehicle is dark because the windows 240 of the vehicle are closed, the processor 120 may control the at least one window 240 of the vehicle to be lowered to a predetermined height.

When the vehicle operation ends, the processor 120 may terminate monitoring of the interior brightness information of the vehicle.

According to an embodiment of the present disclosure, the processor 120 may utilize EcaResnet 50 algorithm, among various artificial intelligence algorithms, to monitor vehicle interior brightness information. The EcaResnet 50 is a DNN that is often used for image classification and object recognition.

The memory 130 is connected to the camera module 110 and may store images generated by the camera module 110. The memory 130 may include volatile memory or nonvolatile memory.

According to an embodiment of the present disclosure, the memory 130 may store driver's motion image, passenger image, and interior condition image of the vehicle. Furthermore, the memory 130 is connected to the processor 120 and may output driver's motion image, passenger image, or vehicle interior condition image to the processor 120 by a signal of the processor 120.

Although the above has shown and described various embodiments of the present disclosure, the present disclosure is not limited to the specific embodiments described above. The above-described embodiments can be variously modified and implemented by those skilled in the art to which the present invention pertains without departing from the gist of the present disclosure claimed in the appended claims, and these modified embodiments should not be understood separately from the technical spirit or scope of the present disclosure. Therefore, the technical scope of the present disclosure should be defined only by the appended claims.

In the embodiments disclosed herein, arrangement of illustrated components may vary depending on requirements or environment in which the invention is implemented. For example, some components may be omitted or some components may be integrated and implemented as one.

## Claims

1. A smart in-cabin monitoring system for monitoring a vehicle, comprising
a camera module embedded in an overhead console of the vehicle,
a memory connected to the camera module, and
a processor connected to the camera module and the memory,
wherein the camera module photographs a vehicle interior to generate a vehicle interior image, and
the processor is configured to generate vehicle interior information with the vehicle interior image, monitor the vehicle interior information, and control vehicle's interior devices or to transmit an alarm to a driver or a passenger of the vehicle.

2. The smart in-cabin monitoring system according to Claim 1,
wherein the vehicle interior image includes:
a driver's motion image generated by the camera module by detecting a driver's motion inside the vehicle; a passenger image generated by the camera module by photographing the passenger inside the vehicle; and an interior condition image generated by the camera module by photographing a vehicle interior in which a driver or passenger has boarded and a vehicle interior in which a driver or passenger has disembarked.

3. The smart in-cabin monitoring system according to Claim 2,
wherein the vehicle interior information includes:
driver's motion information generated from the driver's motion image, passenger information generated from the passenger image, and interior condition information generated from the interior condition image.

4. The smart in-cabin monitoring system according to Claim 3,
wherein the driver's motion information includes:
steering wheel gripping information regarding a driver motion of gripping a steering wheel of the vehicle during operation, and driver's facial motion information for monitoring a driver's facial motion by setting a plurality of landmarks on the driver's face and recognizing movements of the landmarks.

5. The smart in-cabin monitoring system according to Claim 3,
wherein the passenger information includes:
seat belt fastening information regarding whether a passenger boarding the vehicle is fastening a seat belt; passenger appearance information regarding the passenger's appearance; passenger motion information for monitoring a passenger's gesture by setting a plurality of landmarks on the passenger's body and recognizing movements of the landmarks; and passenger expression information for monitoring a passenger's facial expression by setting a plurality of other landmarks on passenger's face and recognizing position changes of the other landmarks.

6. The smart in-cabin monitoring system according to Claim 3,
wherein the interior condition information includes:
missing belongings information for determining whether the belongings are missing by comparing images before and after a passenger exits, emergency situation information of the vehicle when an emergency situation occurs for the vehicle, and interior brightness information regarding brightness of light inside the vehicle.

7. The smart in-cabin monitoring system according to Claim 4,
wherein the processor is configured to analyze the steering wheel gripping information and send a grip warning alarm to a driver in case that the driver is not gripping the steering wheel for a predetermined period of time.

8. The smart in-cabin monitoring system according to Claim 4,
wherein the processor is configured to analyze the driver's facial motion information, determine whether the driver is looking ahead or is drowsy driving based on the movement of the plurality of landmarks, and transmit a warning alarm to the driver when it is recognized that the driver is not looking ahead or is drowsy driving.

9. The smart in-cabin monitoring system according to Claim 5,
wherein the processor is configured to analyze the passenger appearance information and
control a plurality of suspensions equipped in the vehicle or
adjust a position of a seat of the vehicle based on a passenger.

10. The smart in-cabin monitoring system according to Claim 5,
wherein the processor is configured to analyze the passenger motion information and control the vehicle's interior devices based on a passenger's gesture.

11. The smart in-cabin monitoring system according to Claim 5,
wherein the processor is configured to analyze the passenger expression information and control the vehicle's interior devices.

12. The smart in-cabin monitoring system according to Claim 6,
wherein the processor is configured to analyze the missing belongings information and transmit a notifying alarm to a passenger regarding missing belongings.

13. The smart in-cabin monitoring system according to Claim 6,
wherein the processor is configured to analyze the emergency situation information and transmit an emergency situation alarm to a hospital adjacent to the vehicle informing an interior image and the emergency situation of the vehicle; and
wherein the processor is configured to analyze the interior brightness information and adjust a height of a window of the vehicle based on a preset interior brightness of the vehicle or a location of the vehicle.

14. The smart in-cabin monitoring system according to Claim 1,
wherein the memory is configured to store the vehicle interior image generated by the camera module and store the vehicle interior information generated by the processor.

15. The smart in-cabin monitoring system according to Claim 1,
wherein the vehicle's interior devices include an audio system of the vehicle, a suspension of wheels of the vehicle, a seat of the vehicle, at least one or more window of the vehicle, or a communication device of the vehicle.
